# EUROPEAN PATENT APPLICATION

(11) **EP 4 516 132 A1**
(43) Date of publication of application: **05.03.2025**
(21) Application number: 23865647.4
(22) Date of filing: 01.06.2023
(51) Int. Cl.: A24D 1/22, A24D 1/20, A24B 15/16, A24F 40/50, A24F 40/46, A24F 40/20

(54) **STICK-TYPE SMOKING ARTICLE AND ELECTRICALLY HEATED SMOKING SYSTEM COMPRISING SAME**

(30) Priority: 13.09.2022 KR 20220115085
(71) Applicant: KT&G Corporation, Daedeok-gu Daejeon 34337 (KR)
(72) Inventor: BAE, Hyung Jin, Daejeon 34128 (KR); KO, Wonyoung, Daejeon 34128 (KR); SON, Giho, Daejeon 34128 (KR)
(74) Representative: Ter Meer Steinmeister & Partner
(86) International application number: PCT/KR2023/007501
(87) International publication number: WO 2024/058342

(57) **Abstract**

The present invention provides an electrically heated smoking system comprising: a stick-type smoking article which comprises a carbon heat source containing a metal heat source; and an auto-ignition device.

## Description

### TECHNICAL FIELD

The present disclosure relates to a stick-type smoking article and an electrically heated smoking system including the same.

### BACKGROUND ART

In general, tobacco refers to a perennial plant belonging to the Solanaceae of the dicotyledonous plant order, and recently, also collectively refers to a product manufactured for the purpose of smoking in which leaves of tobacco are wrapped with cigarette paper and a filter portion is formed at one side. There are thousands of kinds of cigarettes worldwide, and cigarettes have been released in various shapes and forms.

Research is actively being conducted on electrically heated smoking articles as a solution to compensate for the disadvantages of combustion-type cigarettes, such as cigarettes, leaf cigarettes, and pipe cigarettes, among the above cigarettes. Specifically, mainstream smoke containing an aerosol is generated by heating an aerosol generating material in a heated smoking article through a scheme, such as a heater or ultrasonic vibration, and thus, the emission of ingredients in cigarettes may be minimized while satisfying the smoker's desire to smoke, thereby forming a new market that replaces typical combustion-type cigarettes.

However, an electrically heated smoking article according to a related art requires high power to heat a cigarette using a heater. Specifically, a battery C rate of 1C or greater is used to preheat an electrically heated smoking article, and a high current of 1 A or greater is consumed during smoking. Accordingly, the lifespan of a battery is damaged. In addition, in the electrically heated smoking article according to the related art, the taste of tobacco has been adjusted by a temperature profile, but a major issue of a change in physical properties due to heating of an internal medium has occurred.

Therefore, there is a need to develop an electrically heated smoking system that may consume less power compared to electrically heated smoking articles according to the related art and that may control the taste of tobacco while reducing a change in physical properties of a smoking article.

### DISCLOSURE OF THE INVENTION

### TECHNICAL GOALS

Therefore, to overcome the problems and/or limitations of existing technologies as described above, an aspect of the present disclosure is to provide a stick-type smoking article including a carbon heat source containing a metal heat source, and an electrically heated smoking system that may control the taste of tobacco using only an airflow path controller when the carbon heat source is ignited.

However, goals to be achieved are not limited to those described above, and other goals not mentioned above can be clearly understood by one of ordinary skill in the art from the following description.

### TECHNICAL SOLUTIONS

According to an embodiment of the present disclosure, there is provided a stick-type smoking article including a carbon heat source,
wherein the carbon heat source includes a metal heat source.

According to an aspect, there is provided an electrically heated smoking system including a stick-type smoking article, and an automatic ignition device,
wherein the stick-type smoking article includes a carbon heat source,
wherein the carbon heat source includes a metal heat source, and
wherein the automatic ignition device includes a stick insertion portion into which the stick-type smoking article is inserted to ignite the carbon heat source.

According to another aspect, there is provided an airflow path control method of an electrically heated smoking system including a stick-type smoking article, and an automatic ignition device, the airflow path control method including:
step C1 of applying a current to a metal heat source when a terminal of the stick-type smoking article and a terminal of the automatic ignition device contact;
step C2 of controlling the current flowing in the metal heat source based on a temperature of the carbon heat source; and
step C3 of blocking the current and operating an airflow path controller.

### EFFECTS OF THE INVENTION

In the present disclosure, a current flowing in a metal heat source may be blocked when a carbon heat source is ignited, which may lead to a reduction in power consumption in comparison to an electrically heated smoking article according to a related art. Thus, it is possible to increase the maximum number of cigarettes smoked per charge and also possible to manufacture a battery having a small size. A reduction in the size of the battery is advantageous for device miniaturization, and a structure of an electric circuit may also be simplified.

In addition, in the present disclosure, a draw resistance may be reduced after an action (puffing) of a smoker to draw on a smoking article with his or her mouth, and accordingly, an airflow path controller may compensate for a pressure drop to adjust the taste of tobacco. Thus, it is possible to provide great satisfaction with smoking to a smoker.

It should be understood that the effects of the present disclosure are not limited to the above-described effects, but are construed as including all effects that can be inferred from the configurations described in the following description or claims of the present disclosure.

### BRIEF DESCRIPTION OF DRAWINGS

FIG. 1 is a diagram illustrating an electrically heating smoking system 100 including a stick-type smoking article 101 including a carbon heat source, and an automatic ignition device 102.
FIG. 2 illustrates a side of the stick-type smoking article 101 including the carbon heat source, and a cross section of a stick insertion portion 103 that is included in the automatic ignition device to be in contact with an end of the stick-type smoking article.
FIG. 3 is a perspective view illustrating the stick-type smoking article 101 including the carbon heat source.

### BEST MODE FOR CARRYING OUT THE INVENTION

Hereinafter, embodiments will be described in detail with reference to the accompanying drawings. However, various alterations and modifications may be made to the embodiments, and the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonlyused dictionaries, should be interpreted as having a meaning that is consistent with their meaning in the context of the relevant art and will not be interpreted in an idealized or overly formal sense unless expressly so defined herein.

In addition, when describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, the terms first, second, A, B, (a), and (b) may be used to describe components of the embodiments. These terms are used only for the purpose of discriminating one component from another component, and the nature, the sequences, or the orders of the components are not limited by the terms.

Components included in one embodiment and components having a common function will be described using the same names in other embodiments. Unless otherwise mentioned, the descriptions on the embodiments may be applicable to the following embodiments and thus, duplicated descriptions will be omitted for conciseness.

Throughout the specification, a "smoking article" refers to an article capable of generating an aerosol, such as tobacco (cigarettes), cigars, and the like. The smoking article may include an aerosol generating material, or an aerosol forming substrate. In addition, the smoking article may include a solid material based on tobacco raw materials such as a reconstituted tobacco sheet, cut tobacco leaves, reconstituted tobacco, and the like. A smoking material may include a volatile compound.

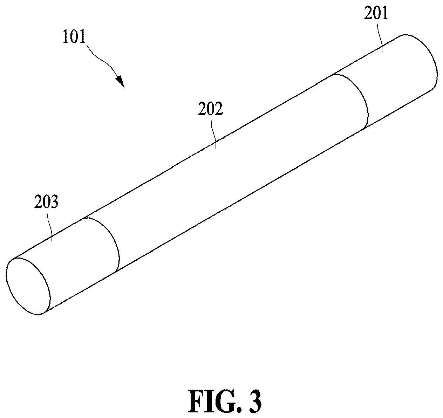

In addition, throughout the specification, the term "upstream" or "upstream direction" refers to a direction away from a mouth of a user puffing a smoking article, and the term "downstream" or "downstream direction" refers to a direction toward the mouth of the user puffing the smoking article. For example, in a stick-type smoking article shown in FIG. 3, a tobacco medium portion 202 is disposed upstream or in the upstream direction of a filter portion 203.

Hereinafter, embodiments of the present disclosure will be described in detail with reference to the drawings.

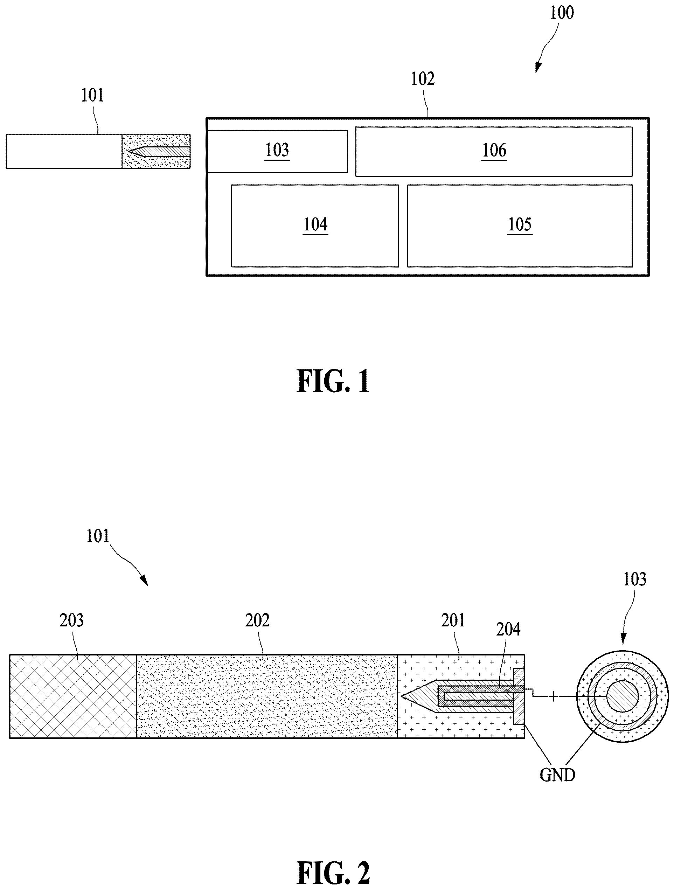

FIG. 1 is a diagram illustrating an electrically heating smoking system 100 including a stick-type smoking article 101 including a carbon heat source, and an automatic ignition device 102. Referring to FIG. 1, the automatic ignition device 102 according to an embodiment of the present disclosure may include a stick insertion portion 103, a controller 104, a battery 105, and an airflow path controller 106. Referring to FIGS. 2 and 3, the stick-type smoking article 101 including the carbon heat source may include a carbon heat source 201, the tobacco medium portion 202, the filter portion 203, and a metal heat source 204. However, embodiments are not limited thereto, various modifications and additions to the configuration are possible.

According to an embodiment of the present disclosure, the stick-type smoking article 101 may be provided, and the stick-type smoking article 101 may include the carbon heat source 201.

In the present disclosure, a temperature of the carbon heat source 201 does not need to be high enough to cause a combustion or thermal deterioration of the tobacco medium portion 202 during use of the stick-type smoking article 101. However, a combustion temperature of the carbon heat source 201 needs to be high enough to generate sufficient heat so that sufficient volatile compounds are released from the tobacco medium portion 202. In particular, the combustion temperature needs to be high enough to generate an acceptable aerosol, during an initial smoking puff. To avoid a delay between an ignition of the carbon heat source 201 and a generation of an aerosol, the carbon heat source 201 needs to rapidly reach an appropriate combustion temperature after ignition.

The carbon heat source 201 may have a carbon content of at least 35% by dry weight, more desirably of at least 40% by dry weight, and most desirably of at least about 45% by dry weight of the carbon heat source.

A carbon heat source may be formed of at least one suitable carbon-containing material, and an additive may be included to improve a characteristic of the carbon heat source 201. In an example, an additive to promote an ignition of a carbon heat source may correspond to perchlorate, chlorate, nitrate, peroxide, permanganate, zirconium, or a combination thereof, and an additive to promote a combustion of a carbon heat source may include, for example, potassium or potassium salts, such as potassium citrate. The types of additives listed above are merely examples and are not limited to the types listed above.

In addition, the carbon heat source 201 may include at least one ignition aid.

In an embodiment of the present disclosure, the carbon heat source 201 may include the metal heat source 204. The metal heat source 204 may include a metal with a low resistance. In an example, a resistance value may have a value greater than 0 Ω and less than 0.7 Ω. Different resistance values of the metal heat source 204 may be set based on, for example, a component, a length, a width, a thickness, and the like of a metal heat source, and a metal having a low resistance may include, for example, gold, silver, copper, aluminum, iron, and the like, but is not limited thereto.

Meanwhile, in the present disclosure, the metal heat source 204 may include a positive (+) terminal in a central portion, and a negative (-) terminal (round; GND) disposed outside the positive (+) terminal.

Meanwhile, the stick-type smoking article 101 according to an embodiment of the present disclosure may include the tobacco medium portion 202, the filter portion 203, and a wrapper.

The tobacco medium portion 202 typically refers to a tobacco material containing nicotine, such as leaf tobacco, and may further include an excipient. The excipient, which is a material that may be included in the tobacco medium portion 202, may include a pH adjuster, a binder, an aerosol former, other additives, and the like, in addition to tobacco materials, however, embodiments are not limited thereto.

Tobacco materials may be tobacco leaf scraps, tobacco stems, tobacco dust generated during tobacco processing, and/or tobacco leaf prime lamina strip. In addition, the type of tobacco leaves may be at least one selected from flue-cured tobacco, Burley tobacco, and domestic tobacco, such as fire-cured tobacco, sun-cured tobacco, and air-cured tobacco, but is not limited thereto.

When a pH adjuster is used, any material known in the art may be used as a pH adjuster without significant limitation and may include, for example, a basic inorganic salt.

In addition, the binder may be a material capable of increasing a hardness by allowing ground tobacco materials to properly bind, and any material known in the art may be used as a binder without limitation and may include, for example, at least one selected from a group consisting of alginate; cellulose, such as methyl cellulose, ethyl cellulose, ethyl hydroxyethyl cellulose, and carboxymethyl cellulose; dextran; gum; gum derivatives, such as hydroxyethyl guar gum, hydroxypropyl guar gum, hydroxyethyl locust bean gum, and hydroxypropyl locust bean gum; pectins, such as fruit pectins, citrus pectins and tobacco pectins; starches, such as modified or derivatized starches; pullulan; and konjac flour.

In addition, as an example, the aerosol former may be a material that may be volatilized to convey nicotine, and the like, in an aerosol when heated above a specific volatilization temperature, and specific types thereof may be at least one selected from a group consisting of monohydric alcohols, such as menthol; polyhydric alcohols, such as triethylene glycol, tetraethylene glycol, 1,3-butanediol, erythritol, propylene glycol, and glycerol; esters of polyhydric alcohols, such as glycerol mono-, di- or triacetate; aliphatic esters of mono-, di- or polycarboxylic acids, such as diethyl suberate, dimethyl dodecanedioate, dimethyl tetradecanedioate, ethyl laurate, lauryl acetate, and triethyl citrate; benzyl benzoate; benzyl phenyl acetate; ethyl vanillate; lauric acid; myristic acid; propylene carbonate; and tributyrin, but are not limited thereto.

Moreover, the other additives may further include, but are not limited to, at least one selected from a group consisting of a flavoring agent, a wetting agent, a plasticizer, tobacco and nontobacco fibers, aqueous and non-aqueous solvents, and a combination thereof.

In addition, the flavoring agent may be an agent that imparts taste and/or flavor to an aerosol generated from a tobacco material. The flavoring agent may include licorice, sucrose, fructose syrup, isosweet, cocoa, lavender, cinnamon, cardamom, celery, fenugreek, cascarilla, sandalwood, bergamot, geranium, honey essence, rose oil, vanilla, lemon oil, orange oil, mint oil, caraway, cognac, jasmine, cacocail, menthol, cassia, ylang-ylang, sage, spearmint, ginger, coriander, coffee, etc., but is not limited thereto. Thus, it is possible to compensate for the lack of smoking flavor and taste of a leaf cigarette, mask undesirable scent and taste, and impart distinguishing flavor.

The filter portion 203 may correspond to a cellulose acetate filter, a paper filter, or a filter formed of a polymer material, but is not limited thereto.

In addition, the filter portion 203 may also be flavored with the flavoring agent.

The wrapper may be manufactured with general filter wrapping paper, and one or more perforations may be selectively formed in a circumferential direction to allow external air to flow in or internal gas to flow out in a tipping wrapper that binds the tobacco medium portion 202 and a filter, and accordingly, it is possible to realize an air dilution rate of a cigarette and adjust an amount of mainstream smoke components to be transferred.

According to an embodiment of the present disclosure, the electrically heated smoking system 100 that includes the stick-type smoking article 101 including the carbon heat source 201, and the automatic ignition device 102 may be provided. The carbon heat source 201 may include the metal heat source 204. The automatic ignition device 102 may include the stick insertion portion 103 into which the stick-type smoking article 101 is inserted to ignite the carbon heat source 201.

In an example, the automatic ignition device 102 may include the airflow path controller 106.

The airflow path controller 106 may control an amount of airflow flowing in an airflow path based on a draw resistance during smoking. Specifically, a draw resistance (pressure drop) within the stick-type smoking article 101 may be reduced due to repeated puffing by a user. The airflow path controller 106 may sense a reduction in the draw resistance and increase the draw resistance of the automatic ignition device 102 itself. In other words, the present disclosure may provide a uniform draw resistance and taste of tobacco using the airflow path controller only.

In an example, the electrically heated smoking system 100 may include a sensor configured to sense the draw resistance in the stick-type smoking article 101. A draw resistance detection sensor may sense the draw resistance of the stick-type smoking article 101 after puffing of the user and generate a pressure drop signal. A sensing signal of the draw resistance detection sensor may be transferred to the airflow path controller 106. The airflow path controller 106 may control an airflow to increase a pressure drop of the automatic ignition device 102 itself. However, embodiments are not limited thereto.

**In** the electrically heated smoking system 100 according to an embodiment of the present disclosure, the stick insertion portion 103 may include a terminal of the automatic ignition device. The terminal of the automatic ignition device may include a positive (+) terminal in a central portion, and a negative (-) terminal disposed outside the positive (+) terminal. The metal heat source 204 of the stick-type smoking article 101 may include the positive (+) terminal in the central portion, and the negative (-) terminal disposed outside the positive (+) terminal. When the stick-type smoking article 101 is accommodated in the stick insertion portion 103, the positive (+) terminal and the negative (-) terminal of the stick-type smoking article 101 may contact a positive (+) terminal and a negative (-) terminal of the automatic ignition device 102, respectively, and a current may flow in the metal heat source 204. In other words, the carbon heat source 201 may be heated by power supplied from the battery 105. The heated carbon heat source 201 may allow an aerosol to be generated from the tobacco medium portion 202.

The automatic ignition device 102 may be manufactured with various structures having an airflow path, through which external air flows in or internal gas flows out, even in a state in which the stick-type smoking article 101 is accommodated, and embodiments are not limited to the drawings.

In an example, the automatic ignition device 102 may include the controller 104. The controller 104 may control the overall operation of the electrically heated smoking system 100.

First, power supplied to the stick insertion portion 103 may be controlled. Specifically, a state in which a terminal of the stick-type smoking article and a terminal of the automatic ignition device contact may be recognized, and power may be controlled to be supplied. The metal heat source 204 in the stick-type smoking article 101 may heat the carbon heat source 201. Meanwhile, when preheating is completed by raising a temperature of the carbon heat source 201 and when the carbon heat source 201 is ignited, the controller 104 may block a current flowing in the metal heat source 204. Accordingly, power consumption may be reduced, and a size of a battery may be reduced, which may be advantageous in device miniaturization and may lead to a simplification of a structure of an electric circuit. When a current reaches a first value, the controller 104 may control the airflow path controller 106 to operate.

The controller 104 may control operations of other components included in the automatic ignition device 102 in addition to the stick insertion portion 103 and the airflow path controller 106. The controller 104 may identify a state of each of the components of the automatic ignition device 102 and determine whether a device is operable. However, embodiments are not limited thereto.

The battery 105 of the present disclosure may supply power required to operate the electrically heated smoking system 100. For example, the battery 105 may supply power to heat the stick insertion portion 103 and supply power required to operate the controller 104. In addition, the battery 105 may supply power required to operate a display, a sensor, a motor, and the like, installed in the electrically heated smoking system 100. However, embodiments are not limited thereto.

According to another embodiment of the present disclosure, an airflow path control method of the electrically heated smoking system 100 may be provided. Specifically, the airflow path control method may include step C1 of applying a current to the metal heat source 204 when a terminal of the stick-type smoking article and a terminal of the automatic ignition device contact; step C2 of controlling the current flowing in the metal heat source 204 based on a temperature of the carbon heat source 201; and step C3 of blocking the current and operating the airflow path controller 106.

In step C2, when the carbon heat source 201 is ignited, the current flowing in the metal heat source 204 may be blocked.

In step C3, the airflow path controller 106 may control an amount of airflow flowing in an airflow path based on a draw resistance in the stick-type smoking article 101.

However, embodiments are not limited thereto, and general-purpose components other than the components shown in FIG. 1 may be included in the automatic ignition device 102. For example, the automatic ignition device 102 may include a display capable of displaying visual information, and/or a motor to output tactile information, and may further include at least one sensor, for example, a pressure drop detection sensor, a stick-type smoking article insertion recognition sensor, and the like. In addition, although not shown in FIGS. 1 to 3, the automatic ignition device 102 may also form a system together with a separate cradle. For example, the cradle may be used to charge the battery 105 of the automatic ignition device 102.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A stick-type smoking article comprising a carbon heat source, the stick-type smoking article, wherein the carbon heat source comprises a metal heat source.

2. The stick-type smoking article of claim 1, wherein the metal heat source comprises a positive (+) terminal in a central portion, and a negative (-) terminal disposed outside the positive (+) terminal.

3. The stick-type smoking article of claim 1, wherein the metal heat source is a metal having a resistance greater than 0 Ω and less than 0.7 Ω.

4. The stick-type smoking article of claim 1, wherein the metal heat source comprises at least one selected from a group consisting of gold, silver, copper, aluminum, and iron.

5. An electrically heated smoking system comprising a stick-type smoking article and an automatic ignition device, wherein
the stick-type smoking article comprises a carbon heat source,
the carbon heat source comprises a metal heat source, and
the automatic ignition device comprises a stick insertion portion into which the stick-type smoking article is inserted to ignite a carbon heat source.

6. The electrically heated smoking system of claim 5, wherein the automatic ignition device comprises an airflow path controller configured to adjust an amount of airflow path flowing in an airflow path based on a draw resistance.

7. The electrically heated smoking system of claim 5, wherein the metal heat source of the stick-type smoking article comprises a positive (+) terminal in a central portion, and a negative (-) terminal disposed outside the positive (+) terminal, and the stick insertion portion comprises a terminal of the automatic ignition device in contact with the positive (+) terminal and the negative (-) terminal.

8. The electrically heated smoking system of claim 5, wherein the automatic ignition device comprises a controller, wherein the controller is configured to ignite a carbon heat source by supplying a current only when the stick-type smoking article is preheated, block the current after the igniting, and operate an airflow path controller.

9. The electrically heated smoking system of claim 5, wherein the automatic ignition device comprises a battery.

10. An airflow control method of the electrically heated smoking system of one of claims 5 to 9, the airflow control method comprising:
step C1 of applying a current to a metal heat source when a terminal of the stick-type smoking article and a terminal of the automatic ignition device contact;
step C2 of controlling the current flowing in the metal heat source based on a temperature of the carbon heat source; and
step C3 of blocking the current flowing in the metal heat source and operating an airflow path controller.

11. The airflow control method of claim 10, wherein, in step C2, the controller is configured to block the current flowing in the metal heat source, when the carbon heat source is ignited.

12. The airflow control method of claim 10, wherein, in step C3, the airflow path controller is configured to control an amount of an airflow flowing in an airflow path based on a draw resistance in the stick-type smoking article.
